# EUROPEAN PATENT APPLICATION

(11) **EP 2 360 550 A1**
(43) Date of publication of application: **24.08.2011**
(21) Application number: 10153598.7
(22) Date of filing: 15.02.2010
(51) Int. Cl.: G06F 1/16

(54) **Heat-dissipating pad for portable computer**

(71) Applicant: Giga-Byte Technology Co., Ltd., Taipei-Hsien 100 (TW)
(72) Inventor: Yeh, Yi-Wei, Taipei 231 (TW)
(74) Representative: Schwerbrock, Florian

(57) **Abstract**

A heat-dissipating pad of a portable computer connects to a panel, contains and connects an electronic device. The heat-dissipating pad includes a body, a casing, a connecting rod and a fixing element. The body includes an accommodating space, a bottom surface and a sidewall. The bottom surface connects to the sidewall for forming the accommodating space. The casing is pivoted on the sidewall of the body. The connecting rod is pivoted on the body. The fixing element is installed on the connecting rod and the panel is fixed on the fixing element.

## Description

### BACKGROUND OF THE INVENTION

### Field of the Invention

The present invention relates to a heat-dissipating pad of a portable computer, and more particularly to a heat-dissipating pad connects to a screen panel.

### Description of the Prior Art

With the rapid development of the portable computer technology, its processing speed and function upgrade greatly. It generates a great deal of heat in operation. When the heat can't be dissipated and then causes the temperature increase too high, the portable computer could be broken down. Generally, a heat-dissipating pad is used to dissipate the heat by positioning the portable computer thereon. The heat-dissipating pad is generally made of heat-conducting material, thus the heat produced by the portable computer in operation can be taken away by the use of the heat-dissipating pad to achieve the excellent heat-dissipating effect.

With the continuous miniaturization of electronic products, the size of the potable computer tends to be much smaller. Accordingly, the user may feel eyes tired after operating the computer for a long time. People may choose a larger screen panel connected to the notebook computer to avoid the uncomfortable. As the screen has become lighter, and e-paper has developed massively. Therefore, the improved heat-dissipating pad is necessary to facilitate to be connected to a larger size screen panel.

The most common heat-dissipating pad has a flat rectangular box body. Therefore, the typical heat-dissipating pad can't accommodate and suspend a screen panel except having the function of dissipating heat. The typical heat-dissipating device is hard to provide multi-function which leads to inconvenience.

### Summary of the Invention

The main objective of the present invention is to provide a heat-dissipating pad of a portable computer for connecting to a screen panel, containing and connecting an electronic device. The heat-dissipating pad includes a body, a casing, a connecting rod and a fixing element. The body includes an accommodating space, a bottom surface and a sidewall. The bottom surface connects to the sidewall for forming the accommodating space. The casing is pivoted on the sidewall of the body. The connecting rod is pivoted on the body. The fixing element is installed on the connecting rod and the panel is fixed detachable on the fixing element.

Preferably, the bottom surface includes a plurality of cable clamps. The electronic device has a power line which is winds around the cable clamps.

Preferably, the casing includes a plurality of outlet openings which is disposed at the side edge of the casing. The power line may extend through the outlet opening and be coupled electrically to the portable computer.

Preferably, the casing includes a plurality of depression parts which enhance the strength of the casing.

Preferably, the body further includes USB connector which is disposed on the sidewalls.

Preferably, the fixing element is pivoted rotatably on the connecting rod.

Preferably, the bottom surface includes a rotation assembly which includes a first partition and a second partition. The first partition is fixed on the bottom surface and is provided with grooves and engaging holes. The second partition is connected rotatably to the first partition and is provided with hook element and engaging element, wherein the engaging element is applied for connecting to the engaging hole, and the hook element can move through the grooves.

Preferably, the groove includes a first end and a second end and the hook element moves between the first end and the second end.

Preferably, the groove is arc-shaped.

Preferably, the connecting rod is Π-shaped.

The present invention may best be understood through the following description with reference to the accompanying drawings.

### BRIEF DESCRIPTION OF THE DRAWINGS

FIG. 1 shows the heat-dissipating pad of the potable computer when the connecting rod is folded in a closed form;
FIG. 2 shows the heat-dissipating pad of the potable computer when the connecting rod and the casing are in a open form;
FIG. 3 is an operational perspective view of the heat-dissipating pad of the potable computer being connected to a screen panel and an electronic device;
FIG. 4 is an exploded perspective view showing the structure of the rotation assembly of the heat-dissipating pad;
FIG. 5 is an assembled perspective view showing the structure of the rotation assembly of the heat-dissipating pad.

### DETAILED DESCRIPTION OF THE INVENTION

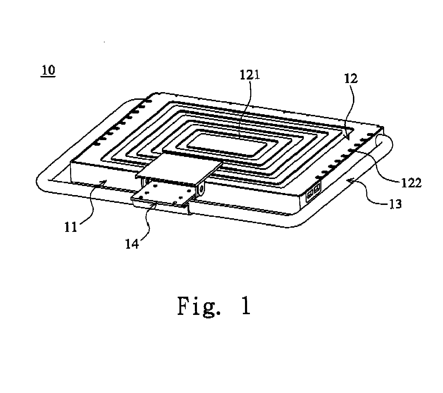

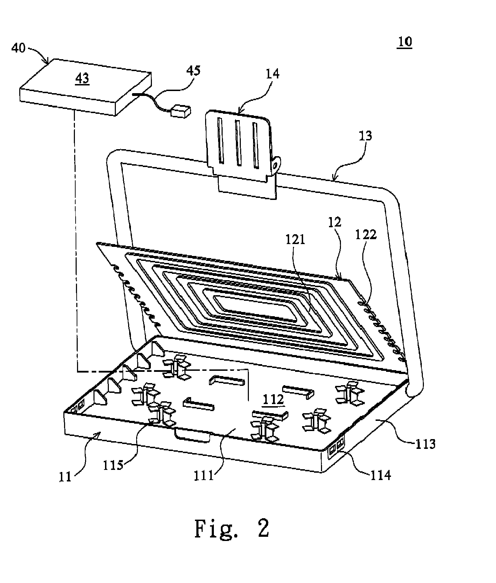

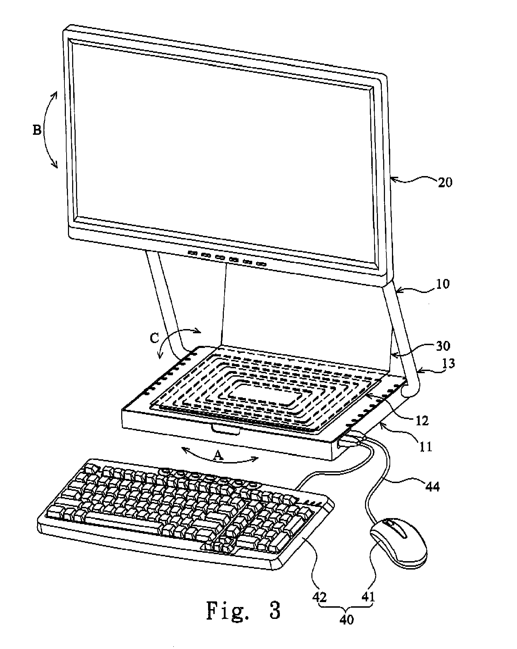

Now referring to Fig. 1 and Fig.2, the heat-dissipating pad 10 of a portable computer according to the present invention includes a body 11, a casing 12, a connecting rod 13 and a fixing element 14. The body 11 includes an accommodating space 111, a bottom surface 112 and a sidewall 113 and USB connector 114. The bottom surface 112 connects to the sidewall 113 for forming the accommodating space 111. The casing 12 is pivoted on the sidewall 113 of the body 11. Thus the casing 12 can be rotated to cover the body 11 and then enclose the accommodating space 111. The USB connector 114 is disposed on the sidewall 113. The casing 12 further includes a plurality of depression parts 121 which makes the casing 12 surface uneven for increasing the strength of the casing 12 so as to support the portable computer 30 positioned thereon, as shown in FIG. 3. The connecting rod 13 is pivoted on the body 11. The fixing element 14 is installed rotatably on the connecting rod 13 and the screen panel 20 is fixed detachably on the fixing element 14, as shown in FIG. 3.

The bottom surface 112 has a plurality of cable clamps 115. The electronic device 40, hard disk 43 in the present embodiment, has a power line 45 which winds around the cable clamps 115 to avoid the power line 45 winding together. The casing 12 has a plurality of outlet openings 122 formed at the side edge of the casing 12. The power line 44 extends through the outlet opening 122 and is coupled electrically to the portable computer 30, as shown in FIG. 3. In the preferred embodiment, the connecting rod 13 is Π-shaped.

FIG. 3 is an operational perspective view of the heat-dissipating pad of the potable computer being connected to a screen panel and an electronic device. Now referring to FIG. 3, the heat-dissipating pad 10 of the portable computer can not only put the portable computer 30 thereon, but connect and contain the electronic device 40. In the preferred embodiment, the electronic device 40 is keyboard 42 and mouse 41.

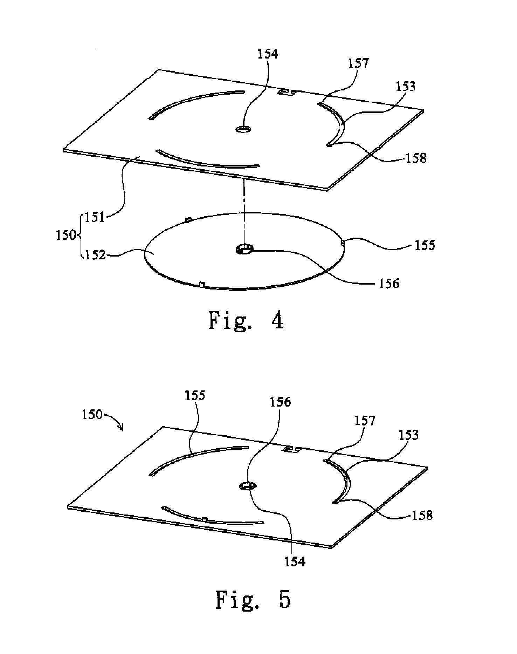

Now referring to FIG. 4 and FIG. 5, the bottom surface 112 includes a rotation assembly 150 which has a first partition 151 and a second partition 152. The first partition 151 is fixed at the exterior side of the bottom surface 112 and is provided with grooves 153 and an engaging hole 154. The second partition 152 is connected rotatably to the first partition 151 and is provided with hook elements 155 and engaging element 156, wherein the engaging element 156 is applied for connecting rotatably to the engaging hole 154, and the hook element 155 is formed corresponding to the groove 153 and moves therein. Preferably, the groove 153 is arc-shaped. The groove 153 has a first end 157 and a second end 158 and the hook element 155 moves between the first end 157 and the second end 158. When the user put the potable computer 30 on the casing 12 of the heat-dissipating pad 10, the user may move the body 11 by A arrow direction, as shown in FIG.3, so as to rotate the potable computer 30 to a certain sight angle the user desired. At the same time, the first partition 151 fixed at the exterior side of the bottom surface 112 may rotate with the body 11 along A arrow direction, relative to the second partition 152.

Turning now to Fig.2 and Fig.3, the heat-dissipating pad 10 according to the present invention can not only effectively take heat away from the notebook computer 30, but connect a screen panel 20 and an electronic device 40 to provide more optional sight angles for the user while watching the screen panel 20, for example, the user may rotate the fixing element 14 pivoted to the connecting rod 13 so as to rotate the screen panel 20 by B arrow direction, or rotate the connecting rod 13 pivoted to the body 11 so as to adjust the height of the screen panel 20. Moreover, the electronic device 40 can be contained within the accommodating space 111 while not in use.

Although the invention has been explained in relation to its preferred embodiment, many other possible modifications and variations can be made without departing from the spirit and scope of the invention as hereinafter claimed.

## Claims

1. A heat-dissipating pad of a portable computer for connecting to a screen panel, containing and connecting an electronic device, comprising:
a body, comprising an accommodating space, a bottom surface and a sidewall, wherein the bottom surface connecting to the sidewall for forming the accommodating space;
a casing, pivoted on the sidewall of the body;
a connecting rod, pivoted on the body;
a fixing element, installed on the connecting rod and the screen panel is fixed detachable on the fixing element.

2. The heat-dissipating pad of a portable computer according to claim 1, wherein said bottom surface includes a plurality of cable clamps, said electronic device has a power line which winds around the cable clamps.

3. The heat-dissipating pad of a portable computer according to claim 2, wherein the casing includes a plurality of outlet openings formed at the side edge of the casing, said power line may extend through the outlet opening and be coupled electrically to the portable computer.

4. The heat-dissipating pad of a portable computer according to claim 1, wherein the casing includes a plurality of depression parts which enhance the strength of the casing.

5. The heat-dissipating pad of a portable computer according to claim 1, wherein the body further includes USB connector which is disposed on the sidewalls.

6. The heat-dissipating pad of a portable computer according to claim 1, wherein the fixing element is pivoted rotatably on the connecting rod.

7. The heat-dissipating pad of a portable computer according to claim 1, wherein the connecting rod is Π-shaped.

8. The heat-dissipating pad of a portable computer according to claim 1, wherein the bottom surface includes a rotation assembly having a first partition and a second partition, the first partition fixed on the bottom surface and provided with grooves and engaging holes, the second partition connected rotatably to the first partition and provided with hook element and engaging element, wherein the engaging element is applied for connecting to the engaging hole, and the hook element can move through the grooves.

9. The heat-dissipating pad of a portable computer according to claim 8, wherein the groove includes a first end and a second end and the hook element moves between the first end and the second end.

10. The heat-dissipating pad of a portable computer according to claim 8, wherein the groove is arc-shaped.
